Europäisches Patentamt

European Patent Office

Office européen des brevets

(11) Veröffentlichungsnummer: **0 142 895**
**B1**

(12)

# EUROPÄISCHE PATENTSCHRIFT

(45) Veröffentlichungstag der Patentschrift:
10.05.89

(51) Int. Cl.⁴: **G 02 F 1/09, G 02 B 6/14**

(21) Anmeldenummer: **84201643.8**

(22) Anmeldetag: **14.11.84**

(54) **Magneto-optische Wellenleiterstruktur mit künstlicher optischer Anisotropie.**

(30) Priorität: **17.11.83 DE 3341482**

(43) Veröffentlichungstag der Anmeldung:
**29.05.85 Patentblatt 85/22**

(45) Bekanntmachung des Hinweises auf die Patenterteilung:
**10.05.89 Patentblatt 89/19**

(84) Benannte Vertragsstaaten:
**DE FR GB IT SE**

(56) Entgegenhaltungen:
EP-A-0 015 129
GB-A-1 531 883
GB-A-2 000 876
US-A-4 032 216

APPLIED OPTICS, vol. 20, no. 14, 15. Juli 1981. A. SHIBUKAWA, M. KOBAYASHI: "Optical TE-TM mode conversion in double epitaxial garnet waveguide", Seiten 2444-2450

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten: **FR GB IT SE**

(72) Erfinder: **Dammann, Hans, Dr., Eichenstrasse 27, D-2081 Tangstedt (DE)**
Erfinder: **Schmitt, Hans- Jürgen, Prof. Dr., Hangstrasse 34, D-5100 Aachen (DE)**
Erfinder: **Schmitz, Günter, Eisenbahnweg 36, D-5100 Aachen (DE)**

(74) Vertreter: **Meier, Friedrich, Dipl.- Ing., Philips Patentverwaltung GmbH Wendenstrasse 35 Postfach 10 51 49, D-2000 Hamburg 1 (DE)**

EP 0 142 895 B1

LIBER, STOCKHOLM 1989

## Beschreibung

Die Erfindung betrifft eine magneto-optische Wellenleiterstruktur zur Konversion von in der Struktur geführten Moden mit einer magneto-optischen Schicht, in der die Moden verlaufen und die von außen magnetisiert ist, mit einer Trägerschicht, auf der die magneto-optische Schicht angeordnet ist, und mit einer parallel zur Schichtebene liegenden optisch anisotropen Struktur zur Phasenanpassung der Moden bei Totalreflexion an den Grenzflächen der magneto-optischen Schicht.

Eine Wellenleiterstruktur dieser Art ist allgemein bekannt. Sie dient dazu, verschiedene in der magneto-optischen Schicht verlaufende Moden ineinander umzuwandeln (Modenkonversion). Die Grundmoden sind hierbei exakt oder zumindest näherungsweise transversalmagnetische (TM) und transversalelektrisch (TE) Wellen, deren Amplituden mathematisch über eine Streumatrix miteinander verknüpft sind. Die Verkopplung der Moden erfolgt durch Totalreflexion an den Grenzflächen der magneto-optischen Schicht und in der magneto-optischen Schicht selbst, die in Ausbreitungsrichtung der Moden magnetisiert ist. Um eine nennenswerte Umwandlung der Wellentypen ineinander zu erreichen, ist eine erhebliche Anzahl von Reflexionen erforderlich. Eine kumulative Überlagerung erfordert aber bestimmte Phasenbeziehungen zwischen den Einzelreflexionen, d.h. angenähert gleiche Phasengeschwindigkeit von TM- und TE-Wellen in der wellenführenden Struktur, d.h. eine sog. Phasenanpassung. Für einen rein gyrotropen dielektrischen Film als Wellenleiter ist dies normalerweise nicht gegeben. Um eine Phasenanpassung zu erreichen, ist vielmehr eine zusätzliche optische Anisotropie erforderlich, beispielsweise eine anisotrope Deckschicht zur Beeinflussung der Phasensprünge der Moden bei Totalreflexion an den Grenzflächen der magneto-optischen Schicht.

Aus dem Aufsatz von S.T. Hirsch, J. Appl. Phys. 52 (5), May 1981, Seiten 3190 bis 3198, ist bereits bekannt, für derartige optisch anisotrope Deckschichten einkristalline Schichten aus Lithiumniobat ($LiNbO_3$) zu verwenden. Sie werden auf die magneto-optische Schicht, die beispielsweise aus Yttrium-Eisen-Granat (YIG) bestehen kann, aufgebracht. Wegen der unterschiedlichen Gitterstruktur beider Kristalle ist jedoch eine Zwischenschicht vorzusehen, beispielsweise aus Selen.

Eine Wellenleiterstruktur dieser Art besitzt somit einen relativ komplizierten und schwer herstellbaren Schichtaufbau. Infolge des Aufbringens der Zwischenschicht sind derartige Strukturen für eine industrielle Fertigung ungeeignet.

Aufgabe der Erfindung ist es, eine magneto-optische Wellenleiterstruktur zur Modenkonversion zu schaffen, bei der der Einsatz einkristalliner optisch anisotroper Deckschichten und der erforderlichen Zwischenschichten entfallen kann.

Diese Aufgabe wird gemäß der Erfindung dadurch gelöst, daß die optisch anisotrope Struktur aus einer künstlich erzeugten Phasenstruktur mit Bereichen mit von denen der Zwischenräume unterschiedlichen Brechungsindizes besteht, und daß die Abmessungen der Bereiche und ihre gegenseitigen Abstände in Ausbreitungsrichtung der Moden klein gegenüber der Wellenlänge des Lichts sind.

Derartige künstlich erzeugte optisch anisotrope Phasenstrukturen haben den Vorteil, daß die Wellenleiterstruktur mit ihnen in einfacher Weise versehen werden kann. Komplizierte Einkristall-Epitaxie-Prozesse und aufwendige technologische Verfahrensschritte werden somit vermieden.

Nach einer sehr vorteilhaften Ausbildung der Erfindung ist die Phasenstruktur auf der dem Trägerkörper gegenüberliegenden Oberfläche der magneto-optischen Schicht angeordnet. Hierzu kann beispielsweise ein herkömmliches optisch isotropes Material auf die magneto-optische Schicht aufgesputtert, aufgeschleudert, aufgedampft oder in einer anderen Technologie aufgebracht und anschließend strukturiert werden.

Nach einer anderen sehr vorteilhaften Ausbildung der Erfindung ist die magneto-optische Schicht selbst als optisch anisotrope Phasenstruktur ausgebildet. Der Einsatz einer zusätzlichen optisch anisotropen Deckschicht kann somit entfallen. Die magneto-optische Schicht ist dazu ebenfalls strukturiert, d.h., sie besitzt verschiedene Bereiche mit unterschiedlichen Brechungsindizes.

Nach einer weiteren sehr vorteilhaften Ausbildung der Erfindung ist die Phasenstruktur in den Trägerkörper an seiner der magneto-optischen Schicht gegenüberliegenden Seite eingebracht. In diesem Fall ist praktisch nur der Oberflächenbereich des Trägerkörpers, auf dem die magneto-optische Schicht liegt, strukturiert. Die Strukturierung des Trägerkörpers kann dabei vor dem Aufbringen der magneto-optischen Schicht erfolgen.

Ferner ist es möglich, sowohl die magneto-optische Schicht als auch den Trägerkörper zu strukturieren. Darüber hinaus kann auch eine Deckschicht und die magneto-optische Schicht bzw. eine Deckschicht und der Trägerkörper strukturiert werden. Gegebenenfalls ist auch eine Strukturierung von Deckschicht, magneto-optischer Schicht und Trägerkörper möglich.

Vorteilhaft besitzt die jeweilige Phasenstruktur durch Maskenbestrahlung und anschließendes Ätzen erzeugte Bereiche, die vorzugsweise durch Röntgenbestrahlung oder Schwerionenbeschuß erzeugt sind. Hierdurch wird es möglich, Phasenstrukturen mit sehr kleinen Bereichen unterschiedlicher Brechungsindizes zu erzeugen. Die Bereiche müssen dabei sehr klein gegenüber der Lichtwellenlänge der in der Struktur geführten Moden sein.

Phasenstrukturen können selbstverständlich auch nur durch Schwerionenbeschuß eines geeigneten Grundmaterials ohne einen anschließenden Ätzvorgang erzeugt werden, da die mit Schwerionen beschossenen Gebiete einen anderen Brechungsindex besitzen als das nicht beschossene Material.

Vorzugsweise ist die Phasenstruktur als Phasengitter ausgebildet. Das Phasengitter kann beispielsweise rechteckförmige Bereiche mit unterschiedlichen Brechungsinzices besitzen, wie z. B. aus Appl. Phys. Lett. 42 (6), 15. März 1983, Seiten 492 bis 494, bekannt ist. Das Phasengitter kann aber auch ein trapez-, dreieck- oder sinusförmig ausgebildetes Phasenprofil besitzen.

Vorteilhaft kann die Phasenstruktur auch durch statistisch verteilte Kernspuren gebildet sein. Derartige Phasenstrukturen sind durch einfache Bestrahlung des Grundmaterials mit Schwerionen leicht herstellbar.

Die gegebenenfalls fortgeätzten Gebiete der Phasenstrukturen können zusätzlich mit einem Material gefüllt sein, dessen Brechungsindex von dem des Phasenstruktur-Grundmaterials verschieden ist, so daß eine genaue Anpassung der Phasengeschwindigkeiten der in der Struktur geführten Moden möglich ist.

Nach einer vorteilhaften Weiterbildung dienen die magneto-optischen Wellenleiterstrukturen nach der Erfindung zum Aufbau von optischen Isolatoren, Zirkulatoren und Schaltern. Diese Bauelemente haben in letzter Zeit für die optische Datenübertragung mit Hilfe von Glasfasern erhebliche Bedeutung erlangt. Isolatoren lassen dabei Licht nur in einer Richtung passieren, während sie die entgegengesetzte Richtung optisch sperren. Sie werden insbesondere eingesetzt, um eine Lichtquelle, z. B. einen Laser, vor Störreflexionen aus dem angeschlossenen optischen System zu schützen. Zirkulatoren werden u.a. dann verwendet, wenn Sende- und Empfangsleitungen optischer Systeme getrennt werden müssen, während optische Schalter dazu dienen, z. B. aus einem Eingangstor kommende Strahlung je nach Schaltzustand auf unterschiedliche Ausgangstore zu verteilen.

Die Zeichnungen stellen Ausführungsbeispiele der Erfindung dar. Es zeigen:

Fig. 1 den prinzipiellen Aufbau einer magneto-optischen Wellenleiterstruktur,
Fig. 2a bis f magneto-optische Wellenleiterstrukturen nach der Erfindung,
Fig. 3a einen optischen Isolator,
Fig. 3b einen optischen Isolator in integrierter Technik,
Fig. 4 einen optischen Zirkulator, und
Fig. 5 einen optischen Schalter, wobei in den Figuren 3 bis 5 Wellenleiterstrukturen nach der Erfindung eingesetzt sind.

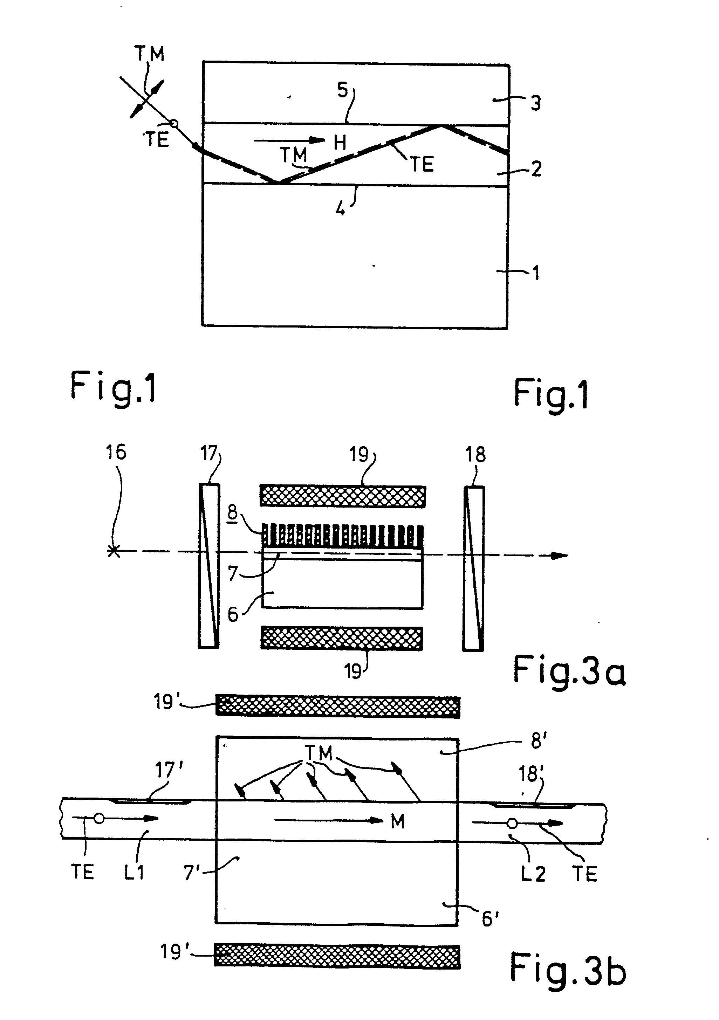

Der prinzipielle Aufbau einer magneto-optischen Wellenleiterstruktur besteht nach Fig. 1 aus einer Trägerschicht 1 (Substrat), die beispielsweise eine einkristalline Gadolinium-Gallium-Granatschicht (GGG) von 0,5 bis 1 mm Dicke ist. Auf der Trägerschicht 1 befindet sich eine magneto-optische Schicht 2 von ca. 5 bis 10 µm Dicke, die beispielsweise aus einem Yttrium-Eisen-Granat (YIG) besteht. Die magneto-optische Schicht 2 trägt eine weitere Schicht 3, die parallel zur magneto-optischen Schicht 2 liegt, und die eine optisch anisotrope Struktur besitzt. Die magneto-optische Schicht 2 weist gegenüber der Trägerschicht 1 und der optisch anisotropen Deckschicht 3 einen größeren Brechungsindex auf, so daß innerhalb der magneto-optischen Schicht 2 und in deren Schichtebene verlaufende Strahlung an den Grenzflächen 4 bzw. 5 der magneto-optischen Schicht 2 unter bestimmten Bedingungen total reflektiert wird. innerhalb der magneto-optischen Schicht verläuft ein parallel zur Schichtebene und vorzugsweise in Ausbreitungsrichtung der Strahlung orientiertes magnetisches Feld H, das z. B. mit Hilfe einer äußeren, die Wellenleiterstruktur umfassenden Magnetspule (nicht dargestellt) erzeugt werden kann.

Eine derartige Wellenleiterstruktur dient zur Konversion von Moden. In Fig. 1 sind dazu zwei Grundmoden TM und TE dargestellt. Die transversalelektrische Mode schwingt dabei senkrecht zur Einfallsebene der in die magneto-optische Schicht 2 einfallenden Strahlung, während die transversalmagnetische Mode in der Einfallsebene schwingt. Die Einfallsebene ist in Fig. 1 gleichzeitig die Zeichenebene. Beide Moden TM und TE können in der Wellenleiterstruktur miteinander koppeln, wie beispielsweise von Wang et al. in J. Appl. Phys., Vol. 43, Nr. 4, April 1972, Seiten 1861 bis 1875, eingehend diskutiert wurde. Dabei wird die TE-Mode in die TM-Mode umgewandelt und umgekehrt. Die Umwandlung bzw. Verkopplung der beiden Moden erfolgt nach mehrfacher Totalreflexion der Moden an den Grenzflächen 4 und 5 der magneto-optischen Schicht 2. Hierbei müssen sich die Moden kumulativ überlagern, was bestimmte Phasenbeziehungen zwischen den Einzelreflexionen bzw. angenähert gleiche Phasengeschwindigkeiten der TE- und TM-Moden, d.h. eine sogenannte Phasenanpassung, erfordert. Eine solche Phasenanpassung ist nur möglich, wenn eine optisch anisotrope Struktur, z. B. eine optisch anisotrope Deckschicht 3, vorhanden ist. Unter der Phasenanpassungs-Bedingung, daß die Winkel der Totalreflexion für die TE- und TM-Moden gleich sind, findet die vollständige Modenumwandlung nach einer bestimmten Strecke statt. Das bedeutet z. B., daß die ursprünglich eingestrahlte TE-Mode um 90° gedreht wurde und nunmehr als TM-Mode weiterläuft. Es gibt andererseits Punkte in der Wellenleiterstruktur, an denen eine TE-Mode z. B. erst zur Hälfte in eine TM-Mode umgewandelt worden ist, d.h. ihre Energie wurde erst zur Hälfte in die TM-Mode übertragen. Bei ursprünglicher Einstrahlung nur einer TE-Mode in die magneto-optische Schicht 2 verlaufen dann in dieser Schicht 2 zwei Moden TE und TM, deren Schwingungsrichtungen um 90° zueinander stehen und die gleiche Amplituden aufweisen. Es ergibt sich somit eine resultierende Schwingung, deren Schwingungsrichtung gegenüber der Schwingungsrichtung der ursprünglich eingestrahlten TE-Mode um nur 45° versetzt ist.

Es ist erkennbar, daß die beschriebene Wellenleiterstruktur dazu geeignet ist, je nach ihrer Länge die Schwingungsrichtung einer ursprünglich eingestrahlten Mode um einen bestimmten Winkel zu drehen. Wellenleiterstrukturen dieser Art lassen sich somit für optische Isolatoren, optische Zirkulatoren und optische Schalter verwenden. Insbesondere eignen sich diese Wellenleiterstrukturen zum Aufbau integrierter planarer Isolatoren, Zirkulatoren und Schalter.

Wie die Erfindung zeigt, ist es nicht zwingend, die optisch anisotrope Struktur ausschließlich auf der magneto-optischen Schicht 2 anzuordnen. Diese optisch anisotrope Struktur kann vielmehr auch innerhalb der magneto-optischen Schicht 2 oder auch innerhalb der Trägerschicht 1 liegen, und zwar an ihrer der magneto-optischen Schicht 2 zugewandten Seite. Darüber hinaus hat sich gezeigt, daß auch mehrere der erwähnten Schichten 1 bis 3 mit optisch anisotropen Strukturen versehen werden können. Optisch anisotrop bedeutet dabei, daß der Brechungsindex für TE-Moden von dem Brechungsindex für TM-Moden verschieden ist.

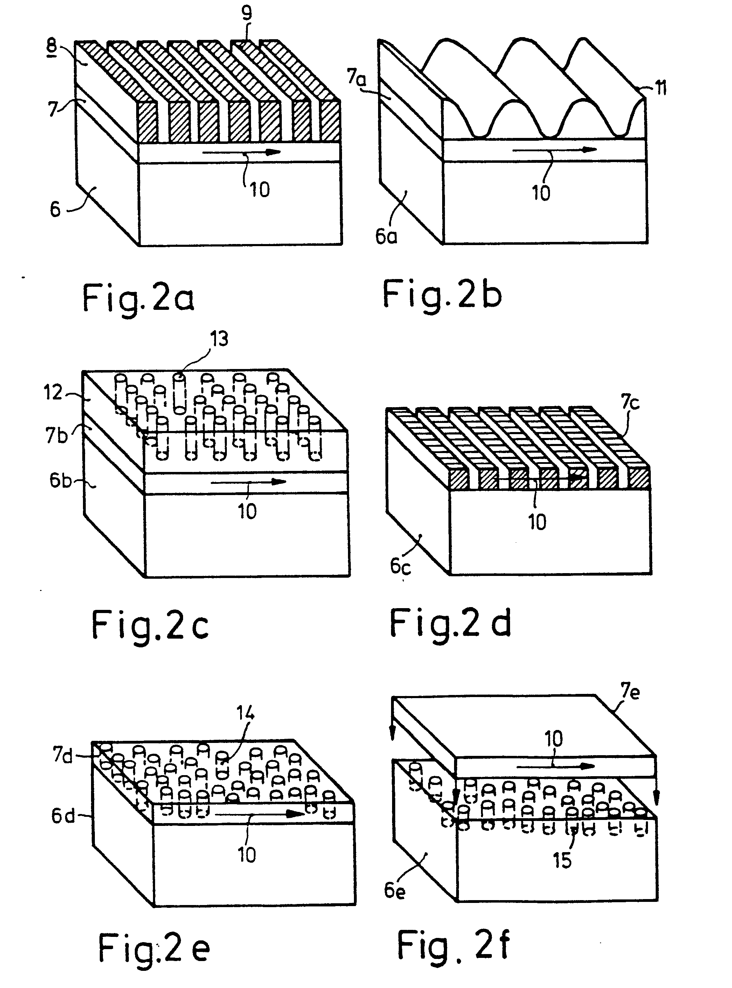

Die Fig. 2a bis f zeigen verschiedene Ausführungsbeispiele der Wellenleiterstruktur nach der Erfindung. Nach Fig. 2a ist auf einer Trägerschicht 6 eine magneto-optische Schicht 7 angeordnet. Oberhalb der magneto-optischen Schicht 7 befindet sich eine optisch anisotrope Phasenstruktur, die als Phasengitter 8 ausgebildet ist. Das Phasengitter 8 besitzt einzelne Gitterstege 9, die quer zu ihrer Längsrichtung einen rechteckförmigen Querschnitt haben und mit ihrer Längsrichtung vorzugsweise senkrecht zur Ausbreitungsrichtung 10 der innerhalb der magneto-optischen Schicht 7 verlaufenden Moden angeordnet sind. Die Abmessungen der Gitterstege 9 in Ausbreitungsrichtung 10 der Moden sowie die Gitterperiode in dieser Richtung 10 sind sehr klein gegenüber der benutzten Lichtwellenlänge.

Die Gitterstege 9 können in ihrer Längsrichtung gesehen auch mit anderen als rechteckförmigen Querschnitten versehen sein. Beispielsweise können diese dreiecks- oder trapezförmig sein (nicht dargestellt). Die Phasenstruktur kann aber auch, wie die Fig. 2b zeigt, als sinusförmiges Gitter 11 ausgebildet sein, welches entsprechend dem Phasengitter 8 auf einer magneto-optischen Schicht 7a angeordnet ist. Sowohl das Phasengitter 8 als auch das Phasengitter 11 kann dadurch hergestellt werden, daß auf die magneto-optische Schicht 7 bzw. 7a zunächst ein optisch isotropes Material, z. B. Siliziumdioxyd, PMMA (Polymethylmetaacrylat), Fotolack oder ähnliches, aufgesputtert bzw. aufgeschleudert wird, welches anschließend in geeigneter Weise belichtet und geätzt wird. Die Belichtung erfolgt vorzugsweise mit Hilfe von Röntgenstrahlung oder durch Schwerionenbeschuß, da auf diese Weise vorteilhaft gegenüber der Lichtwellenlänge sehr kleine Gitterstrukturen erzeugt werden können.

Die Fig. 2c zeigt eine weitere aus Trägerschicht 6b und magneto-optischer Schicht 7b bestehende Wellenleiterstruktur, bei der die optisch anisotrope Phasenstruktur aus einer Platte 12 besteht, in die zylindrische Bereiche 13 eingebracht sind, in denen der Brechungsindex von dem der Platte 12 verschieden ist. Die zylindrischen Bereiche 13 verlaufen dabei vorzugsweise senkrecht zu der auf der magneto-optischen Schicht 7b liegenden Platte 12. Sie sind beispielsweise in dieser in Form von in Ausbreitungsrichtung 10 hintereinander liegenden Reihen, deren Reihenrichtung senkrecht zur Ausbreitungsrichtung 10 verläuft, angeordnet. Sie können aber auch nach einem anderen Muster angeordnet sein. Hierdurch wird eine phasengitterähnliche Struktur erhalten, die ebenfalls die gewünschte optische Anisotropie aufweist. Dabei sind die Durchmesser der Bereiche 13 und ihre gegenseitigen Abstände in Ausbreitungsrichtung 10 der Moden klein gegenüber der Lichtwellenlänge der Moden.

Die zylindrischen Bereiche 13 innerhalb der Platte 12 können beispielsweise durch Schwerionenbeschuß der Platte 12, die aus einem geeigneten Grundmaterial besteht, erzeugt werden. Diese von Schwerionen durchstrahlten Gebiete der Platte 12 können zusätzlich noch geätzt werden, so daß hohlzylindrische Bereiche 13 erhalten werden.

In der Fig. 2d ist eine Wellenleiterstruktur dargestellt, deren Trägerschicht 6c nur eine magneto-optische Schicht 7c trägt, auf der keine weitere Deckschicht vorgesehen ist. Die magneto-optische Schicht 7c kann hierbei genauso wie die Phasengitter 8 bzw. 11 der Fig. 2a und 2b strukturiert sein.

Eine entsprechende Wellenleiterstruktur ist in der Fig. 2e dargestellt. Hier ist jedoch die auf der Trägerschicht 6d liegende magneto-optische Schicht 7d in anderer Weise strukturiert. Sie besitzt zylindrische Bereiche 14, die vorzugsweise senkrecht zur Schichtebene der magneto-optischen Schicht 7d verlaufen und in dieser statistisch verteilt angeordnet sind. Dabei sind die Durchmesser der zylindrischen Bereiche 14 und ihre gegenseitigen Abstände in Ausbreitungsrichtung 10 der Moden klein gegenüber der Lichtwellenlänge. Auch hier können die zylindrischen Bereiche 14 beispielsweise durch Schwerionenbeschuß erzeugte Kernspuren oder hohlzylindrische Löcher sein, die durch Ätzung der Kernspuren entstanden sind.

Eine weitere Möglichkeit, eine Wellenleiterstruktur mit einer optisch anisotropen Struktur zu versehen, ist in Fig. 2f dargestellt. Hier ist der Trägerkörper 6e an seiner der magneto-optischen Schicht 7e gegenüberliegenden Oberflächenschicht strukturiert. Der Deutlichkeit halber ist die magneto-optische Schicht 7e, die sonst auf der Trägerschicht 6e liegt, abgehoben von dieser gezeichnet. Die Trägerschicht ist hier, wie beispielsweise schon unter Fig. 2e bezüglich der magneto-optischen Schicht 7d ausgeführt, mit statistisch verteilten zylindrischen Bereichen 15 versehen, durch die die Trägerschicht 6e an ihrer Oberfläche optisch anisotrope Eigenschaften erhält. Selbstverständlich brauchen diese zylindrischen Bereiche nicht senkrecht zur Oberfläche der Trägerschicht 6e orientiert sein. Sie können, wie auch die zylindrischen Bereich 13 und 14 in den Figuren 2c und 2e, auch schräg zur Oberfläche der jeweiligen Schichten verlaufen. Die fortgeätzten Bereiche können darüber hinaus in allen Phasenstrukturen 2a bis 2f mit zusätzlichem Material ausgefüllt sein, das gegenüber dem Grundmaterial einen unterschiedlichen Brechungsindex besitzt.

Eine andere Möglichkeit des Schichtaufbaus besteht darin, die Trägerschicht an der der magneto-optischen Schicht gegenüberliegenden Seite sinus- oder stufenförmig bzw. sägezahnförmig auszubilden. Die darauf liegende magneto-optische Schicht ist dann an ihrer der Trägerschicht zugewandten Seite entsprechend geformt, so daß beide Schichten ineinander greifen.

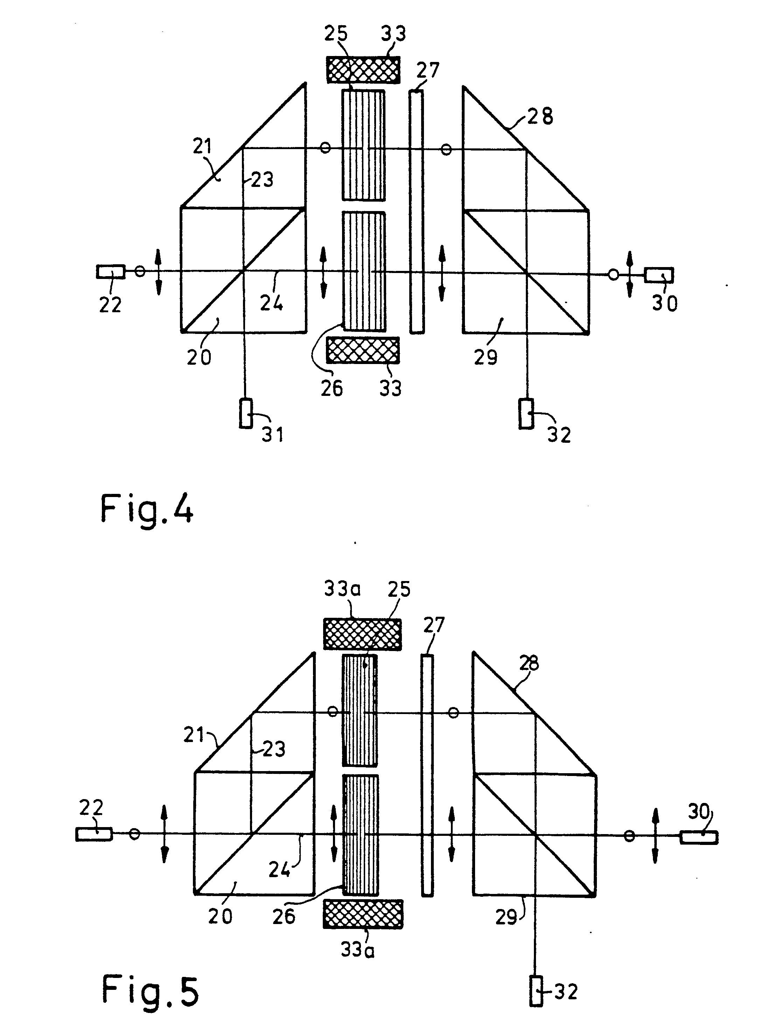

In Fig. 3 ist ein Ausführungsbeispiel für einen optischen Isolator mit einer Wellenleiterstruktur nach der Erfindung dargestellt. Bei dem optischen Isolator fällt Licht von einer Lichtquelle 16 durch zwei um 45° zueinander gekreuzte Polarisatoren 17 und 18, zwischen denen beispielsweise eine Wellenleiterstruktur nach Fig. 2a angeordnet ist. Diese Wellenleiterstruktur ist von einer Magneteinrichtung 19 umgeben, die ein parallel zur magneto-optischen Schicht 7 verlaufendes Magnetfeld erzeugt, das die Schicht 7 magnetisch sättigt. Die Magneteinrichtung 19 kann beispielsweise ein Permanentmagnet oder ein Elektromagnet sein.

Bei dem optischen Isolator wird das aus der Lichtquelle 16 kommende Licht durch den Polarisator 17 polarisiert. Durch Modenkonversion wird die Schwingungsebene dieses in der magneto-optischen Schicht 7 verlaufenden Lichtes um 45° gedreht, so daß es den unter diesem Winkel eingestellten Polarisator 18 passieren kann. Die Polarisationsebene des aus dem sich anschließenden optischen System reflektierten Lichtes wird dagegen von der Wellenleiterstruktur um 45° gedreht, so daß dieses Licht auf den Polarisator 17 in Sperrichtung trifft. Auf diese Weise wird eine optische Entkopplung der Lichtquelle von dem angeschlossenen optischen System erreicht.

Die Lichtquelle 16 kann beispielsweise ein Halbleiterlaser sein, der direkt an der Stirnfläche der magneto-optischen Schicht angeordnet ist. In diesem Falle entfällt der Polarisator 17, da der Halbleiterlaser bereits linear polarisiertes Licht aussendet.

Für den Fall, daß der Isolator getrennt verwendet werden soll, kann dieser beispielsweise innerhalb eines optischen Steckers angeordnet sein, so daß auf diese Weise optische Leitungswege, z. B. Lichtleitfasern, in einfacher Weise entkoppelt werden können.

Die Fig. 3b zeigt einen weiteren optischen Isolator in integrierter Technik. Bei ihm wird Licht über Lichtleitfasern L1, L2 in die magneto-optische Wellenleiterstruktur 7', die auf einem Substrat 6' liegt und von einer optischanisotropen Deckschicht 8' bedeckt ist, ein- bzw. ausgekoppelt. Die Lichtleitfasern L1, L2 sind dabei mit der Wellenleiterstruktur 7' optisch verkittet. Die Wellenleiterstruktur 7' ist eindimensional ausgeführt und zur Ein- bzw. Auskopplung des Lichtes in geeigneter Weise strukturiert.

Die Lichtpolarisatoren 17', 18' können nach allgemein bekannter Technik direkt in die Lichtleitfasern L1 bzw. L2 vor und hinter der magneto-optischen Schicht 7' eingebracht werden, indem die Lichtleitfasern L1, L2 seitlich angeschliffen und mit einer Kombination aus einer dielektrischen und einer leitfähigen Schicht an der angeschliffenen Stelle versehen werden.

Die gesamte Einrichtung wird von einer Magnetfeld-Anordnung 19' zur Erzeugung eines vorzugsweise in Ausbreitungsrichtung des Lichtes verlaufenden Magnetfeldes M umgeben.

Bei dem optischen Isolator nach der Fig. 3b wird nach dem prinzipiellen Vorschlag von S. Yamamoto, IEEE Journal Quantum Electronic, QE 12 (1976) 764, ausgenutzt, daß sich bei einer geeigneten Orientierung der optischen Anisotropie die Modenkonversionen infolge des nicht-reziproken Faraday-Effekts und der optischen Anisotropie für eine Mode und eine Ausbreitungsrichtung (Fig. 3b für die von links nach rechts laufende TE-Mode) gegenseitig kompensieren, für die umgekehrte Richtung (von rechts nach links in Fig. 3b) sich dagegen addieren. Für eine rücklaufende Welle (in Fig. 3b von rechts nach links) findet somit laufend Modenkonversion von TE nach TM statt.

Bei geeigneten Werten für die optische Anisotropie, d.h. für die unterschiedlichen Brechungsindizes, läßt sich erreichen, daß die zurücklaufende, durch Modenkonversion entstehende TM-Welle nicht mehr in der Schicht 7' geführt wird, sondern infolge des für sie gültigen hohen Brechungsindexverlaufs in die Deckschicht 8' "hineinleckt" (Leckmode). Für einen solchen Fall kann ggf. der eingangsseitige Polaristor 17' auch fortgelassen werden.

In der Fig. 4 ist ein optischer Zirkulator gezeigt, der mit zwei Wellenleiterstrukturen, wie sie bereits unter den Figuren 1 und 2 beschrieben wurden, ausgerüstet ist. Zirkulatoren werden in optischen Datenübertragungssystemen angewandt, um Sende- und Empfangsleitungen voneinander zu trennen. Da die Datenübertragungs- bzw. faseroptischen Systeme im allgemeinen den Polarisationszustand des Lichtes nicht erhalten, müssen die Zirkulatoren für unpolarisiertes Licht geeignet sein.

Demnach besitzt der optische Zirkulator einen ersten Polarisationsteiler 20 und ein erstes Umlenkprisma 21 zur Zerlegung des von einem Tor 22 ankommenden Lichtes in zwei Strahlenbündel 23 und 24, die senkrecht zueinander polarisiert sind, was durch die Symbolik im Strahlengang angedeutet ist. Die Polarisationsebenen dieser beiden Bündel 23 und 24 werden dann in den Wellenleiterstrukturen 25, 26 um jeweils 45° gedreht. Eine nachfolgende λ/2-Platte 27 ist so eingestellt, daß diese Drehung wieder rückgängig gemacht wird. Zur Vereinigung beider Strahlenbündel 23 und 24 dienen das zweite Umlenkprisma 28 und der zweite Polarisationsteiler 29, so daß das von dem Tor 22 kommende Licht durch das Tor 30 austreten kann. Als optische Tore sind hier beispielsweise die Stirnflächen von Lichtleitfasern gezeigt. Selbstverständlich können diese Tore auch aus anderen, optische Strahlung aufnehmenden Elementen bestehen.

Wird dagegen Licht aus Tor 30 in den optischen Zirkulator eingespeist, so addieren sich die Drehungen der Polarisationsebenen in den beiden Strahlenbündeln 23 und 24 zu jeweils 90°, so daß das Licht von Tor 30 zu Tor 31 gelangt. In der gleichen Weise wird das Licht von Tor 31 zu Tor 32 und von Tor 32 zurück nach Tor 22 gekoppelt. Eine Magnetfeldeinrichtung 33 ist vorgesehen, die parallel zur Schichtebene der magneto-optischen Schichten der Wellenleiterstrukturen und in Ausbreitungsrichtung des Lichtes ein stationäres Magnetfeld zur Sättigung der magneto-optischen Schichten erzeugt.

Der in Fig. 5 dargestellte optische Schalter ist entsprechend dem in Fig. 4 gezeigten Zirkulator aufgebaut. Bei diesem Schalter ist das Tor 31 fortgelassen, während das Tor 22 nur als Eingangstor für die in die Ausgangstore 30 und 32 zu koppelnde Strahlung dient. In welches dieser Ausgangstore 30 bzw. 32 die Strahlung eingekoppelt wird, hängt vom magnetischen Schaltzustand der Magnetfeldeinrichtung 33a ab. Je nachdem nämlich, ob die Magnetisierung innerhalb der magneto-optischen Schichten der Wellenleiterstrukturen in oder entgegen zur Strahlrichtung verläuft, wird das eine oder das andere Ausgangstor mit Strahlung beaufschlagt. Die Magnetisierung der magneto-optischen Schichten wird dabei mit Hilfe der umschaltbaren Magnetfeldeinrichtung 33a hervorgerufen, die als stromdurchflossene Spule ausgebildet ist, deren Stromrichtung umgekehrt werden kann.

**Patentansprüche**

1. Magneto-optische Wellenleiterstruktur zur Konversion von in der Struktur geführten Moden, mit einer magneto-optischen Schicht, in der die Moden verlaufen und die von außen magnetisiert ist, mit einer Trägerschicht, auf der die magneto-optische Schicht angeordnet ist, und mit einer parallel zur Schichtebene liegenden optisch anisotropen Struktur zur Phasenanpassung der Moden bei Totalreflexion an den Grenzflächen der magneto-optischen Schicht, dadurch gekennzeichnet, daß die optisch anisotrope Struktur aus einer künstlich erzeugten Phasenstruktur (8, 11, 12, 7c, 7d, 6e) mit Bereichen mit von denen der Zwischenräume unterschiedlichen Brechungsindizes besteht, und daß die Abmessungen der Bereiche und ihre gegenseitigen Abstände in Ausbreitungsrichtung der Moden klein gegenüber der Wellenlänge des Lichts sind.

2. Wellenleiterstruktur nach Anspruch 1, dadurch gekennzeichnet, daß die Phasenstruktur (8, 11, 12) auf der dem Trägerkörper (6, 6a, 6b) gegenüberliegenden Oberfläche der magneto-optischen Schicht (7, 7a, 7b) angeordnet ist.

3. Wellenleiterstruktur nach Anspruch 1 oder 2, dadurch gekennzeichnet, daß die magneto-optische Schicht (7c, 7d) selbst als optisch anisotrope Phasenstruktur ausgebildet ist.

4. Wellenleiterstruktur nach Anspruch 1, 2 oder 3, dadurch gekennzeichnet, daß die Phasenstruktur in den Trägerkörper (6e) an seiner der magneto-optischen Schicht (7e) gegenüberliegenden Seite eingebracht ist.

5. Wellenleiterstruktur nach Anspruch 2, 3 oder 4, dadurch gekennzeichnet, daß die Querschnitte der Bereiche im Ausbreitungsrichtung der Moden rechteck-, trapez-, dreieck- oder sinusförmig ausgebildet sind.

6. Wellenleiterstruktur nach einem oder mehreren der Ansprüche 1 bis 5, dadurch gekennzeichnet, daß die Phasenstruktur (8, 11, 12, 7c) als Phasengitter ausgebildet ist.

7. Wellenleiterstruktur nach einem oder mehreren der Ansprüche 1 bis 5, dadurch gekennzeichnet, daß die Phasenstruktur durch statistisch verteilte Kernspuren (14, 15) gebildet ist.

8. Optischer Isolator, mit zwei um 45° gegeneinander verdrehten Polarisatoren (17, 18; 17', 18') und einer zwischen ihnen angeordneten Struktur (6, 7, 8; 6', 7', 8') mit einer magneto-optischen Schicht (7, 7') zur Drehung der Schwingungsebene des linear polarisierten Lichtes, wobei die Struktur von einer Magnetisierungseinrichtung (19, 19') zur Erzeugung eines in Strahlrichtung verlaufenden Magnetfeldes umgeben ist, dadurch gekennzeichnet, daß die Struktur nach einem oder mehreren der Ansprüche 1 bis 7 ausgebildet ist.

9. Optischer Zirkulator, mit zwei aus jeweils einem Polarisationsteiler (20, 29) und einer Lichtumlenkeinrichtung (21, 28) bestehenden optischen Einheiten, zwischen denen eine λ/2-Platte (27) und eine Struktur (25) zur Drehung der Schwingungsebene linear polarisierten Lichtes aus magneto-optischem Material angeordnet ist, wobei die Struktur von einer Magnetisierungseinrichtung (33) zur Erzeugung eines in Strahlrichtung verlaufenden Magnetfeldes umgeben ist, dadurch gekennzeichnet, daß die Struktur nach einem oder mehreren der Ansprüche 1 bis 7 ausgebildet ist.

10. Optischer Schalter, mit zwei aus jeweils einem Polarisationsteiler (20, 29) und einer Lichtumlenkeinrichtung (21, 28) bestehenden optischen Einheiten, zwischen denen eine λ/2-Platte (27) und eine Struktur zur Drehung der Schwingungsebene linear polarisierten Lichtes aus magneto-optischem Material angeordnet ist, wobei die Struktur von einer umschaltbaren Magnetisierungseinrichtung (33a) zur Erzeugung eines in oder entgegengesetzt zur Strahlrichtung verlaufenden Magnetfeldes umgeben ist, dadurch gekennzeichnet, daß die Struktur nach einem oder mehreren der Ansprüche 1 bis 7 ausgebildet ist.

## Claims

1. A magneto-optical waveguide structure for the conversion of modes of propagation of the structure, which structure comprises a magneto-optical layer in which the modes propagate and which is magnetized externally, a substrate carrying the magneto-optical layer, and an optically anisotropic structure which extends parallel to the plane of said layer for phase adaptation of the modes in the case of total reflection from the boundary of the magneto-optical layer, characterized in that the optically anisotropic structure is an artificially formed phase structure (8, 11, 12, 7c, 7d, 6e) with zones having refractive indices which are different from those of the intermediate spaces, and in that the dimensions of the zones and their distances from each other in the direction of propagation of the modes are small relative to the wavelength of the light.

2. A waveguide structure as claimed in Claim 1, characterized in that the phase structure (8, 11, 12) is formed on that surface of the magneto-optical layer (7, 7a, 7b) which faces the substrate (6, 6a, 6b).

3. A waveguide structure as claimed in Claim 1 or 2, characterized in that the magneto-optical layer (7c, 7d) itself constitutes the optically anisotropic phase structure.

4. A waveguide structure as claimed in Claim 1, 2 or 3, characterized in that the phase structure is formed in the substrate (6c) on its side which faces the magneto-optical layer (7e).

5. A wave guide structure as claimed in Claim 2, 3 or 4, characterized in that the cross-sections of the zones in the direction of propagation of the modes are rectangular, trapezoidal, triangular or sinusoidal.

6. A waveguide structure as claimed in any of the Claims 1 to 5, characterized in that the phase structure (8, 11, 12, 7c) is constructed as a phase grating.

7. A waveguide structure as claimed in any of the Claims 1 to 5, characterized in that the phase structure is constituted by statistically distributed nuclear-particle tracks (14, 15).

8. An optical isolator comprising two polarizers (17, 18; 17′, 18′) which are rotated 45° relative to each other and a structure (6, 7, 8; 6′, 7′, 8′) interposed between said polarizers, which structure comprises a magneto-optical layer (7, 7′) for rotating the plane of polarization of linearly polarized light, the structure being surrounded by a magnetic field which extends in the beam direction and is produced by a magnetizing device (19, 19′), characterized in that the structure is a structure as claimed in any of the Claims 1 to 7.

9. An optical circulator comprising two optical units which each comprise a polarization splitter (20, 29) and a beam-deflection device (21, 28), between which units a half-wave plate (27) and a structure (25) comprising a magneto-optical material are arranged for rotating the plane of polarization of linearly polarized light, the structure being surrounded by a magnetic field which extends in the beam direction and is produced by a magnetizing device (33), characterized in that the structure is a structure as claimed in any of the Claims 1 to 7.

10. An optical switch comprising two optical units which each comprise a polarization splitter (20, 29) and a beam-deflection device (21, 28) between which units a half-wave plate (27) and a structure comprising a magneto-optical material are arranged for rotating the plane of polarization of linearly polarized light, the structure being surrounded by a magnetic field which extends in the beam direction or in the opposite direction and is produced by a switchable magnetizing device (33a), characterized in that the structure is a structure as claimed in any of the claims 1 to 7.

## Revendications

1. Structure de guide d'onde magnéto-optique pour la conversion de modes introduits dans la structure qui est munie d'une couche magnéto-optique dans laquelle s'étendent les modes et qui est magnétisée à partir de l'extérieur, d'une couche porteuse sur laquelle est disposée la couche magnéto-optique et d'une configuration anisotrope optique située parallèlement au plan de couche pour l'adaptation de phase des modes dans le cas d'une réflexion totale aux faces limites de la couche magnéto-optique, caractérisée en ce que la structure anisotrope optique est constituée par une structure de phase (8, 11, 12, 7c, 7d, 6e) comportant des domaines dont les indices de réfraction s'écartent de ceux des espaces intermédiaires et que les dimensions des domaines et leurs distances mutuelles dans la direction de propagation des modes est faible comparativement aux longueurs d'onde de la lumière.

2. Structure de guide d'onde selon la revendication 1, caractérisée en ce que la structure de phase (8, 11, 12) est disposée sur la surface de la couche magnéto-optique (7, 7a, 7b) opposée au corps porteur.

3. Structure de guide d'onde selon la revendication 1 ou 2, caractérisée en ce que la couche magnéto-optique (7c, 7d) même peut être formée comme une structure de phase anisotrope optique.

4. Structure de guide d'onde selon la revendication 1, 2 ou 3, caractérisée en ce que la structure de phase est introduite dans le corps porteur (6e) du côté situé vis-à-vis de la couche magnéto-optique.

5. Structure de guide d'onde selon la revendication 2, 3 ou 4, caractérisée en ce que les sections des domaines dans la direction de propagation des modes sont rectangulaires, trapézoïdales, triangulaires ou sinusoïdales.

6. Structure de guide d'onde selon l'une ou plusieurs des revendications 1 à 5, caractérisée en ce que la structure de phase (8, 11, 12, 7c) est sous forme d'un réseau de phase.

7. Structure de guide d'onde selon l'une ou plusieurs des revendications 1 à 5, caractérisée en ce que la structure de phase est formée par des pistes nucléaires (14, 15) réparties de façon statistique (14, 15).

8. Isolateur optique présentant deux polariseurs tournés d'un angle de 45° l'un par rapport à l'autre (17, 18; 17', 18') et une structure (6, 7, 8; 6', 7', 8') disposée entre ces derniers et munie d'une couche magnéto-optique (7, 7') pour la rotation du plan d'oscillation de la lumière polarisée linéairement, la structure étant entourée d'un dispositif de magnétisation (19, 19') pour la réalisation d'un champ magnétique dans la direction des rayons, caractérisé en ce que la structure est réalisée selon l'une ou plusieurs des revendications 1 à 7.

9. Circulateur optique comportant deux unités optiques constituées chaque fois par un diviseur de polarisation (20, 29) et un dispositif de déviation de lumière (21, 28) entre lesquelles est disposée une plaque $\lambda/2$ (27) et une structure (25) pour la rotation du plan de polarisation de la lumière polarisée linéairement en matériau magnéto-optique, la structure étant entourée d'un dispositif générateur de magnétisation (33) pour fournir un champ magnétique dans la direction des rayons, caractérisé en ce que la structure est réalisée selon l'une ou plusieurs des revendications 1 à 7.

10. Commutateur optique comportant deux unités optiques constituées chaque fois par un diviseur de polarisation (20, 29) et un dispositif de déviation de lumière (21, 28) entre lesquelles est disposée une lame $\lambda/2$ (27) et une structure pour la rotation du plan de polarisation de la lumière polarisée linéairement en matériau magnéto-optique, la structure étant entourée d'un dispositif générateur de magnétisation commutable (33a) pour la réalisation d'un champ magnétique dans la direction de rayons ou dans la direction opposée, caractérisé en ce que la structure est réalisée selon l'une ou plusieurs des revendications 1 à 7.

Fig.1

Fig.1

Fig.3a

Fig.3b

Fig. 2a

Fig. 2b

Fig. 2c

Fig. 2 d

Fig. 2 e

Fig. 2f

Fig.4

Fig.5